# EUROPEAN PATENT SPECIFICATION

(11) **EP 2 779 492 B1**
(45) Date of publication and mention of the grant of the patent: **09.08.2017**
(21) Application number: 13290059.8
(22) Date of filing: 14.03.2013
(51) Int. Cl.: H04J 4/00, H04J 14/00

(54) **Access network and associated module**
Zugriffsnetzwerk und zugehöriges Modul
Réseau d'accès et module associé

(43) Date of publication of application: 17.09.2014
(73) Proprietor: ALCATEL LUCENT, 92100 Boulogne-Billancourt (FR)
(72) Inventor: Chiaroni, Dominique, Route de Villejust 91620 Nozay (FR); De Valicourt, Guilhem, Route de Villejust 91620 Nozay (FR); Dupas, Arnaud, Route de Villejust 91620 Nozay (FR); Suvakovic, Dusan, Murray Hill, NJ 07974-0636 (US); Vetter, Peter, Murray Hill, NJ 07974-0636 (US); Kumar, Vinod, Route de Villejust 91620 Nozay (FR)

(56) References cited:
- US-A- 570 287
- US-A1- 2005 244 160
- US-B1- 8 335 432

## Description

### BACKGROUND OF THE INVENTION

The present invention relates to the field of optical access networks.
An access network refers to a point-to-multipoint network between a central office managed by an operator and the access points of the subscribers.

One type of access network is the passive optical network (PON) which comprises an optical line terminal or termination (OLT) located in the central office and a plurality of optical network units (ONUs) located at the users ends or access points, the ONUs being connected to the OLT through passive optical elements such as optical couplers or multiplexers.

In the state of the art, different architectures exist for the connection between the OLT and the ONUs.

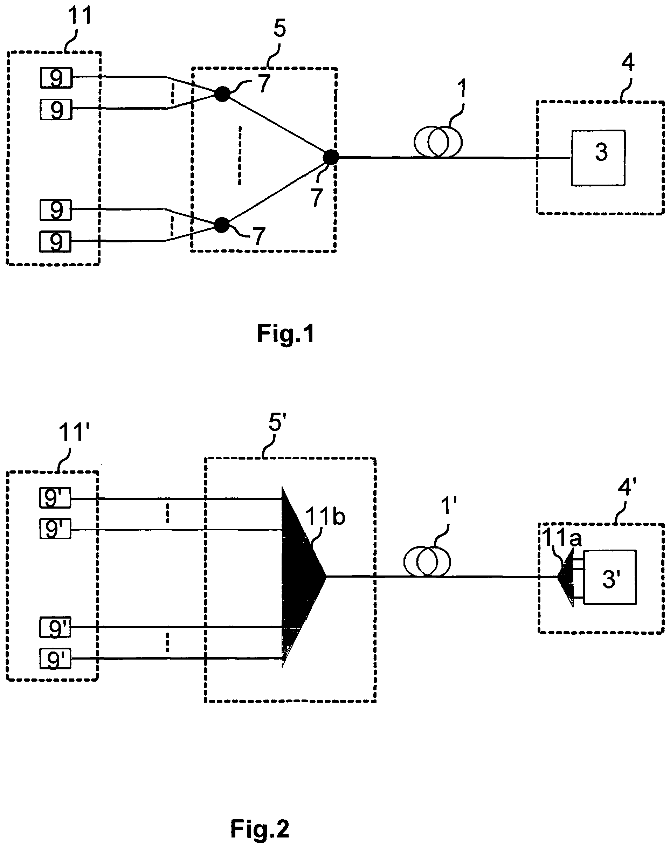

A first architecture called x gigabit passive optical network (xGPON) system, represented in fig.1, refers to the use of an optical fiber 1 between an OLT 3 located in a central office 4 and an intermediate node 5 comprising optical couplers 7 configured for distributing the temporally multiplexed signals sent by the OLT 3 to the different ONUs 9 located in a given area 11. The multiplexed signals received by the ONUs 9 are processed in order for each ONU 9 to recover signals destined to it. The problem with such configuration is the high losses within the optical couplers 7 of the intermediate node 5 and the limited number of users that can be connected to an intermediate node 5.

A second architecture called wavelength division multiplexing passive optical network (WDM PON) system, represented in fig.2, refers to the use of an optical fiber 1' between an OLT 3' located in the central office 4' and an intermediate node 5' wherein the central office 4' and the intermediate node 5' comprise respectively a WDM multiplexer 11a and 11b, the multiplexer 11b being configured for demultiplexing and distributing the wavelength multiplexed signals sent by the OLT to the different ONUs 9', each ONU 9' receiving a signal corresponding to a dedicated wavelength. However, with such configuration, the capacity of transmission allocated to a user is the same whatever its activity so that, in most cases, a great part of the capacity and therefore of the energy is wasted.

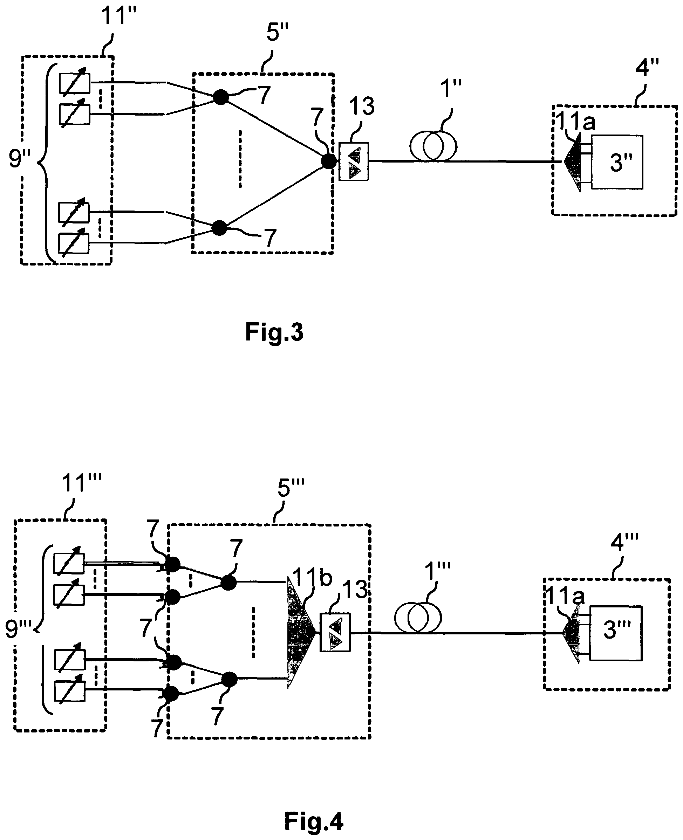

A third architecture called wavelength division multiplexing time division multiplexing passive optical network (WDM TDM PON) comprises two different embodiments that are represented in fig.3 and fig.4. These architectures are a combination of the first two solutions but require a tunable laser in each ONU 9", 9'" and the use of amplifiers 13 in the intermediate node 5", 5"'.

Such architectures are for example described in US 8335432 or US 2005/244160.

Moreover, in all the solutions previously described, the global power consumption of the network is relatively high notably due to the ONUs located in the customers home and representing more than 50% of the total consumption. Thus, due to the growing scarcity of resources and the enforcement of always more restricting consumption standards, reduction of the networks consumption becomes necessary.

### SUMMARY OF THE INVENTION

It is therefore an object of the present invention to overcome the above mentioned drawbacks of the state of the art and to provide a solution that enables both a high flexibility of the access network to adapt the connection capacity to the needs of each customer and a low power consumption of the network.

Thus, the present invention refers to an access network module destined to be linked on one side to a remote optical line terminal "OLT" and on the other side to a plurality of access points of a common area via a plurality of local connections, the said module comprises:
- a plurality of optical network units "ONUs" configured for processing signals exchanged between the remote optical line terminal "OLT" and the local connections and,
- a control unit configured for activating and deactivating the optical network units "ONUs" equipments according to the activity of the local connections.

According to another aspect of the present invention, an optical network unit "ONU" comprises:
- a first transceiver for exchanging signals with the OLT,
- a second transceiver for exchanging signals with a local connection,
- a processing element connected to the first and the second transceivers,
and wherein the first transceiver of the plurality of optical network units "ONUs" are combined and integrated in a first conversion unit, the second transceiver of the plurality of optical network units "ONUs" are combined and integrated in a second conversion unit and the processing element of the plurality of optical network units "ONUs" are combined and integrated in a shared processing unit,
and wherein the processing unit, the first conversion unit and the second conversion unit are connected via a reconfigurable electronic routing unit.

According to a further embodiment, the local connections (27) comprise at least one of the following types of link:
- single mode optical fiber,
- multi-mode optical fiber,
- plastic optical fiber
- multi-core optical fiber.

The embodiments of the present invention also refer to an access network comprising
- an optical line terminal "OLT",
- a plurality of access points located in a residential area,
- an access network module linked on one side to the optical line terminal "OLT" and on the other side to the plurality of access points located in a residential area via local connections.

### BRIEF DESCRIPTION OF THE DRAWINGS

FIG.**1** is a diagram of an access network of the state of the art according to a first embodiment;
FIG.**2** is a diagram of an access network of the state of the art according to a second embodiment;
FIG.**3** is a diagram of an access network of the state of the art according to a third embodiment;
FIG.**4** is a diagram of an access network of the state of the art according to a fourth embodiment;
FIG.**5** is a diagram of an access network according to an embodiment of the present invention;
FIG.**6** is a diagram of a module or intermediate node according to an embodiment of the present invention;
FIG.**7** is a functional diagram of the module according to an embodiment of the present invention;
FIG.**8** is a functional diagram of the module according to another embodiment of the present invention;
FIG.**9** is a diagram of an optical routing unit according to a first embodiment of the present invention;
FIG.**10** is a diagram of an optical routing unit according to a second embodiment of the present invention;
FIG.**11** is a functional diagram of the module according to another embodiment of the present invention;
FIG.**12** is a diagram of bit interleaved signals on a timeline;
FIG.**13** is a diagram of a processing unit according to an embodiment of the present invention;
FIG.**14** is a diagram of the module and the local connections with the access points;
FIG.**15** is a diagram of a building comprising a module and point-to-multipoint local connections;
FIG.**16** is a diagram of an apartment and the associated access points;
FIG.**17** is a diagram of an architecture of an access point;
FIG.**18** is a diagram of an example of access network according to an embodiment of the invention.

In these drawings, the elements having the same reference correspond to elements having a similar function.

### DETAILED DESCRIPTION OF THE INVENTION

As used herein, the term "habitation area" refers to an area of a limited size comprising a plurality of habitations. The habitations may refer to flats of a building, group of houses such as a village or a residential area, group of houses and buildings wherein the habitations may be public or private places, individual or professional places such as the rooms of a hotel or the offices of a company;

As used herein, the term "upstream" refers to the direction of the signals transmitted from the users ends to a central office;

As used herein, the term "downstream" refers to the direction of the signals transmitted from a central office to the users ends;

As used herein the term "local connections" refers to connections located within a local area such as an habitation area;

As used herein, the term "remote" with respect a local area refers to something located outside of the local area such as an habitation.

As used herein, the term "ONU" refers to the acronym optical network unit;

As used herein, the term "OLT" refers to the acronym optical line terminal;

As used herein, the term "PON" refers to the acronym passive optical network;

As used herein, the term "BiPON" refers to the acronym bit interleaved PON;

As used herein, the term "WSS" refers to the acronym wavelength selective switch;

As used herein, the term "FTTH" refers to the acronym fiber to the home;

As used herein the acronym "VCSEL" refers to a vertical cavity surface emitting laser;

As used herein the term "vectorial transceiver" refers to a transceiver configured for applying and detecting high baud rate modulation formats which are based on a combination of different types of modulation (phase, amplitude, polarization...) such as a Quadrature Amplitude Modulation (QAM) format or polarization division multiplexing (PDM)-QAM format.

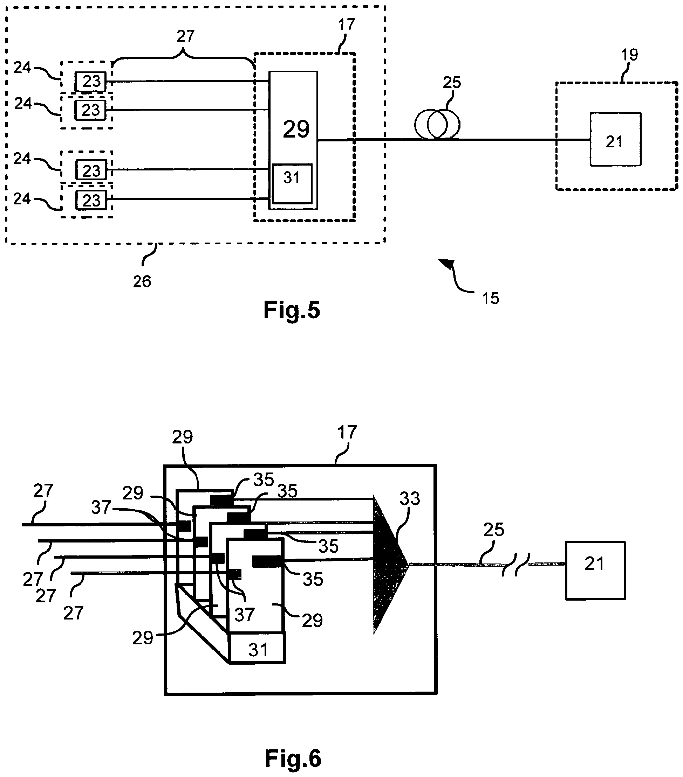

Referring to Fig.5, the embodiments of the present invention refer to an architecture of an access network 15 and notably of a access network module 17 of such network 15 corresponding to an intermediate node 17 between a central office 19 comprising an optical line terminal (OLT) 21 and the access points 23 located at the subscribers ends 24 and which are gathered in a common area 26 herein called habitation area. The central office 19 is located outside of the said habitation area 26.

The access network 15 refers to the combination of the OLT 21, the access network module 17 hereafter called module 17, the access points 23, the optical link 25 between the OLT 21 and the module 17 and the links 27 herein called local connections 27 between the module 17 and the access points 23.

In this architecture, the optical network units (ONUs) 29 are located in the module 17.

With such configuration, most of the processing is therefore transferred from the subscribers ends 24 to the intermediate node 17 which is controlled by an operator so that the activation and the deactivation of the ONUs 29 can be achieved by a control unit 31 and adapted to the traffic in order to minimize the power consumption.

According to a first embodiment described in Fig.6, the module 17 comprises a plurality of ONUs 29 and each ONU 29 comprises a first transceiver 35 for exchanging signals with the OLT 21 and a second transceiver 37 for exchanging signals with a local connection 27.

A transceiver 35, 37 refers to an equipment comprising an emitter for emitting an optical signal such as a laser, for example a fabry-perot laser, and a receiver for receiving and detecting an optical signal such as a photodetector, for example a photodiode. Besides, for the second transceiver 37 connected to the local connections 27, vectorial transceivers using a high baud rate modulation format may be used to increase the capacity of the local connections 27 without increasing the frequency of the connection. Such vectorial transceivers are generally not used for the first transceivers 35 as they imply a higher degradation of the signal during transmission and are therefore mainly used for short connections.

The module 17 also comprises a control unit 31 configured for activating and deactivating the ONUs 29 according to the traffic. For example, when a subscriber does not use its local connection 27, the corresponding ONU 29 is deactivated.

Furthermore, the link 25 with the OLT 21 is an optical link such as a wavelength division multiplexing (WDM) feeder and the signals transmitted from the plurality of ONUs 29 are multiplexed by an optical multiplexer, for example a WDM multiplexer 33 wherein each ONU emits a signal on a different wavelength and the different signals are multiplexed in a WDM signal.

It has also to be noted that several WDM multiplexers can be put in cascade in order to increase the number of local connections 27 served by the intermediate node 17.

Furthermore, the optical link 25 is a bidirectional link wherein a wavelength is transmitted in one direction and another wavelength is transmitted in the other direction. For example, the downstream traffic is transmitted on a wavelength centered on 1490 nm whereas the upstream traffic is transmitted on a wavelength centered on 1310 nm. The throughput of the upstream and downstream traffic can be the same (symmetric link) or can be different (asymmetric link).

However, it has to be noted that the optical link 25 between the module 17 and the OLT 21 may also be implemented as a plurality of optical fibers, for example one for the upstream traffic and one for the downstream traffic or one or two optical fibers for each wavelength associated with an ONU 29.

The local connection 27 can be optical connections or electronic connections. In case of an electronic connection through an electric cable such as a twisted pair, the transceiver 37 is bypassed and the electronic signal is transmitted directly through the electric cable. In case of optical connections, the connections can be point-to-point connections with a media converter and/or a local router located at the subscribers end 24 for converting the optical signal into an electronic signal delivered to a standard interface such as an Ethernet interface. Other types of optical connections, such as point-to-multipoint connections, will be described in the following of the description.

In order to further optimize the intermediate node or module 17, the capacities of the plurality of ONUs 29 of the module 17 can be gathered and shared by the different connections.

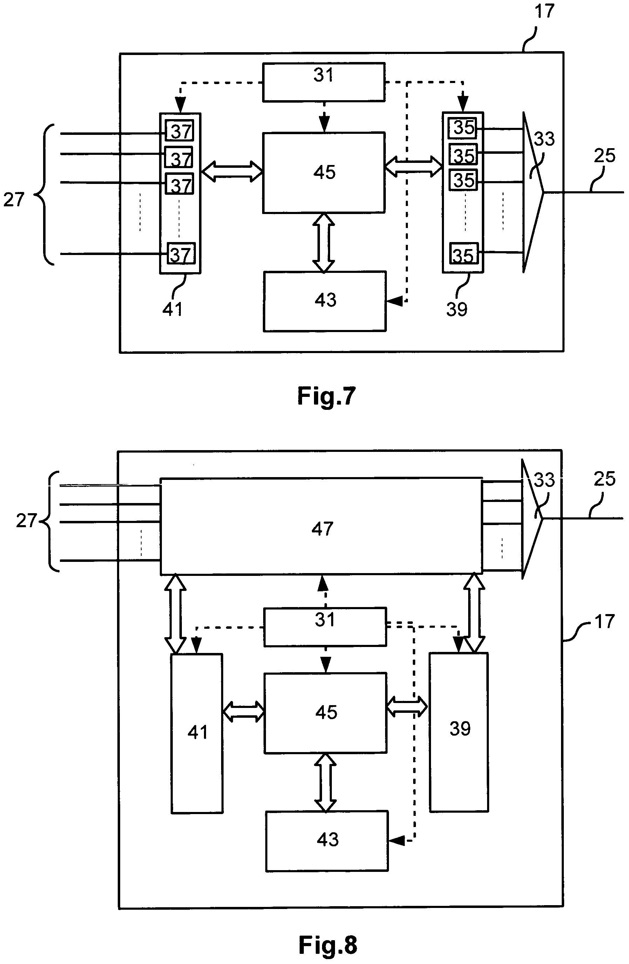

Thus, in an embodiment described in Fig.7, the first transceivers 35 of the ONUs 29 used for the connection with the OLT 21 are combined and integrated in a first conversion unit 39 comprising a plurality of transceivers 35. In the same way, the second transceivers 37 of the ONUs 29 used for the local connections 27 are combined and integrated in a second conversion unit 41 comprising a plurality of transceivers 37. Furthermore, the processing capacities or processing elements of the ONUs 29 are combined and integrated in a processing unit 43. The first conversion unit 39, the second conversion 41 unit and the processing unit 43 are linked by a reconfigurable electronic routing unit 45. This routing unit 45 is implemented for example with electronic switches such as an electronic cross-bar switch and/or electronic gates.

The first conversion unit 39, the second conversion 41 unit and the processing unit 43 can be modular unit wherein their capacity is adapted according to the needs of the module 17.

This modularity may be obtained for example based on the use of a modular rack comprising a plurality of seating wherein the seatings are configured for receiving rack-mount cards or parts corresponding to a processing or a conversion capacity. In the case of a processing unit 43, the rack-mount processing parts are plugged into the seatings of the modular rack so that the global processing capacity is defined by the sum of the capacity of the different processing parts plugged into the rack.

In the same way, the conversion units 39, 41 may comprise rack-mount transceivers that can be plugged in the modular rack of the conversion unit, the number of rack-mount transceivers being adapted to the needs of the module 17.

Furthermore, the different rack-mount processing parts and/or rack-mount transceivers are activated or deactivated according to the traffic by the control unit 31. In case of failure of a rack-mount part, replacement can be achieved easily and for the processing unit, the processing can automatically be shifted to another rack-mount processing part in case of failure of one of the processing part.

Signals transmitted through the optical link 25 or the local connections 27 are transmitted as packets comprising a header so that headers are decoded by the routing unit 45 in order to route the packets. Indeed, the signals received by the first 39 or the second 41 conversion units are generally routed toward the processing unit 43 and signals from the processing unit 43 are routed toward the first 39 or the second 41 conversion units according to their destination but in the case of a secured connection, signals can be transmitted directly from the first 39 to the second 41 conversion unit and vice versa. The routing unit 45 can be controlled by the control unit 31 which can be a global control unit that controls the different elements of the module 17.

Thus, instead of having a processing element dedicated for each local connection 27, the processing elements are gathered in a shared common processing unit 43. The capacity of the processing unit 43 being dimensioned according to the processing needs and the activation of the processing unit 43 is adapted according to the traffic. Besides, the transceivers 35 of the first conversion unit 39 may also be shared by several local connections 27 if the sum of the traffic of several local connections 27 does not exceed the capacity of a transceiver 35 of the first conversion unit 39. For example, if all the local connections have the same capacity and a first local connection 27 uses only 30% of the connection capacity and a second local connection 27 uses 50% of the connection capacity, then the traffic of both local connections can be transmitted toward the OLT 21 by a single transceiver 35 of the second conversion unit 39. A further optimization may also be obtained by statistical optimization which is based on the fact that the local connections are never all used at full capacity at the same time.

In order to further improve the flexibility of the intermediate node or module 17, an optical routing unit 47 may also be added between the optical link 25, the local connections 27, the first conversion unit 39 and the second conversion unit 41 as described in Fig.8.

Thus, the optical routing unit 47 enables to transmit a connection transparently through the module 17 without requiring conversion to an electronic signal which can be useful, for example in the case of a secured connection. Furthermore, the optical routing unit 47 may be connected only to a fraction of the local connections 27 and to a fraction of the WDM multiplexer 33 inputs/outputs, the other local connections 27 and WDM multiplexer 33 inputs/outputs being connected directly respectively to the second 41 and to the first 39 conversion units.

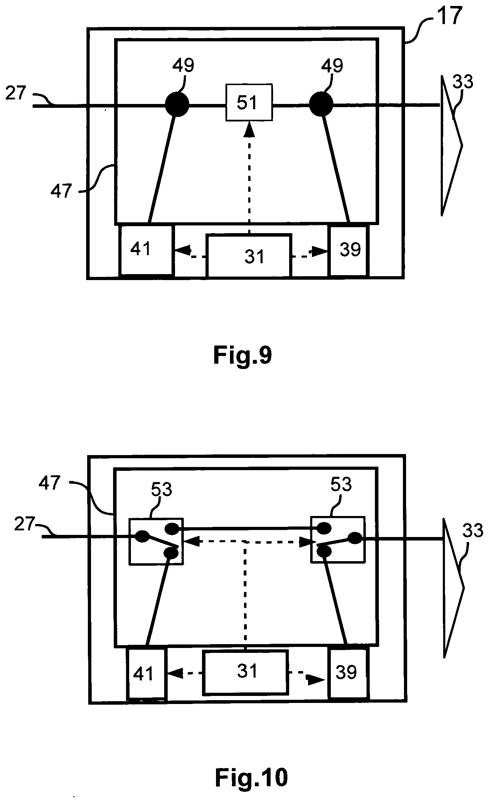

The optical routing unit 47 can be implemented with optical couplers 49 and at least one optical gate 51 as described in figure 9 wherein a signal received from the WDM multiplexer 33 is transmitted by a coupler 49 to both an optical gate 51 and the first conversion unit 39. In the same way, a signal received from a local connection 27 is transmitted to both the optical gate 51 and the second conversion unit 41. The optical gate 51 lets the signal through if direct transmission is required and blocks the signal if processing of the signal is required. The first 39 or second 41 conversion units transmit the signal to the processing unit 43 if a processing is required or drops the signal if direct transmission is required. The at least one optical gate 51 may be controlled by the control unit 31. The number of optical gates 51 and optical couplers 49 being multiplied by the number of local connections requiring a transparent transmission option.

According to an alternate embodiment, the optical routing unit 47 may be implemented by optical switches such as two 2*1 optical switches 53 as described in figure 10. The two optical switches 53 are synchronized and configured to transmit transparently a signal received from the WDM multiplexer 33 to a local connection 27 if transparent transmission is required or to transmit toward the first 39 conversion unit if processing is required. In the same way, a signal received from a local connection 27 is routed either transparently to the WDM multiplexer 33 if transparent transmission is required or routed to the second conversion unit 41 if processing is required. Thus, with an optical routing unit 47 linked to a plurality of local connections 27 either a plurality of 2*1 optical switches are used or a N*N optical switch is used. The optical switches 53 can be controlled by the control unit 31.
Other configurations of optical routing unit known by the man skilled in the art may also be applied instead of the previously described optical routing unit 47 configurations.

Thus, a signal received from the OLT 21 by the optical routing unit 47 is either transmitted transparently toward a local connection 27 or transmitted to the first conversion unit 39 to be converted into an electronic signal. In the same way, a signal received from a local connection 27 is either transmitted transparently to the OLT 21 or transmitted to the second conversion unit 41 to be converted into an electronic signal.

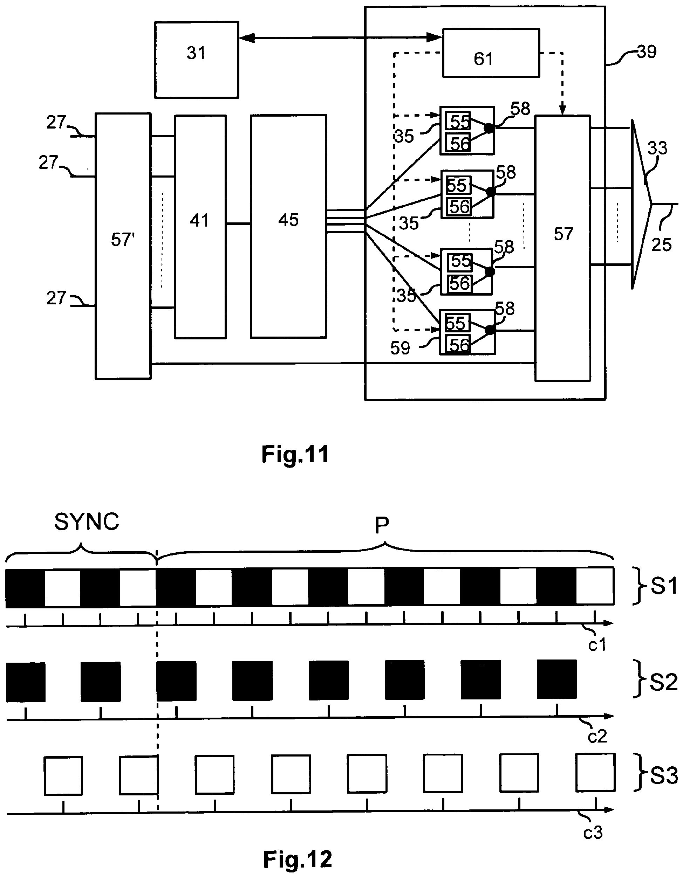

In order to improve the reliability of the module 17, protection can be foreseen to overcome a possible failure in one of the transceivers 35 of the first conversion unit 39. To provide such protection, the first conversion unit 39 is configured for monitoring the signals emitted by the transceivers 35 as described in Fig.11. Such monitoring can be achieved by the photodetector 56 of the transceivers 35. Indeed, a transceiver 35 comprises a laser 55 such as a vertical cavity surface emitting laser (VCSEL), a photodetector 56 and an optical coupler 58 linked to both the laser 55 and the photodetector 56 and the input/output of the transceiver 35 so that a signal emitted by the laser 55 is transmitted toward the input/output of the transceiver 35 but also toward the photodetector 56 that can be used as a monitoring device.

The first conversion unit 39 also comprises a cross-connect element 57 such as an optical patch panel or an N*N optical switch linked on one side to the inputs/outputs of the WDM multiplexer 33 and on the other side to the transceivers 35. Furthermore, the first conversion unit 39 also comprises at least one spare transceiver 59 which is linked to the cross-connect element 57 and a configuration unit 61 linked to the transceivers 35, 59 and the cross-connect element 57 for configuring the connection with the OLT 21. The configuration unit 61 can be linked to the control unit 31 or can be integrated within the control unit 31. The spare transceiver 59 may comprise a tunable laser or a laser having a wavelength different from the wavelength of the other transceivers 35.

Furthermore, the cross-connect element 57 may be connected directly to a similar cross-connect 57' located between the second conversion unit 41 and the local connections 27 so that both cross connect 57 and 57' may replace the optical routing unit 47 described previously.

Thus, when a signal is supposed to be emitted by a transceiver 35 and no light is detected by its photodetector 56, the configuration unit 61 sets the said transceiver 35 as being "out of order" and a reconfiguration of the connection with the OLT 21 is set up wherein the "out of order" transceiver is replaced by a spare transceiver 59. In the case of a spare transceiver 59 having a tunable laser, the said tunable laser is tuned to the wavelength used by the "out of order" transceiver 35 and the reconfiguration is limited to the switching from the "out of order" transceiver 35 to the spare transceiver 59. Otherwise, the configuration unit 61 has to reconfigure the connection with the OLT 21 in order to introduce the wavelength used by the spare transceiver 59 instead of the wavelength used by the "out of order" transceiver 35. It has also to be noted that the combination of the cross-connect 55 and the WDM multiplexer 33 can be replaced by a wavelength selective switch (WSS).

Furthermore, in the same way, a similar protection configuration can also be implemented on the second conversion unit 41 by adding a cross-connect 57', at least one spare transceiver and a configuration unit.

According to another aspect of the invention, in order to ease the processing of the signal and to increase the flexibility of the module 17, the signals exchanged with the OLT 21 and/or with the local connections 27 can be modulated according to a bit interleaved coding modulation. The idea of the bit interleaved coding modulation is to interleave the packets or frames of lower bitrate signals that are destined to several users within a common signal of higher bitrate, the synchronization of the transceivers of the different users being achieved thanks to a SYNC field added in the transmitted signals.

In order to better understand this coding modulation, fig.12 represents an example of a 2Gb/s signal S1 modulated according to a bit interleaved coding modulation with two signals S2 and S3 of 1Gb/s destined to two different users. Signal S1 is encoded with a 2Gb/s bitrate represented by the clock signal c1. The signal comprises packets or frames and a part of the header of these packets or frames is dedicated to a SYNC signal which is used by the transceivers of the first and the second users in order to synchronize their transceiver on their dedicated channel. Thus, the clock signals of the first and the second users respectively noted c2 and c3 correspond to a 1Gb/s bitrate but c3 is shifted with respect to c2 due to the synchronization achieved based on the SYNC part of the signal.

Thus, using a 1Gb/s bitrate equipment, the first and the second users can retrieve the frames or packets associated to their dedicated channel. Such coding modulation is not limited to two users but can be applied to a higher number of users, for example with a 10Gb/s signal and 10 users receiving each a 1Gb/s, the frames of the ten signals being interleaved. Such coding modulation enables therefore having lower bitrate equipments at destination and therefore reducing the power consumption and the cost of the equipments. Such modulation can be applied first between the OLT 21 and the intermediate node 17, for example with a connection of 10Gb/s between the OLT and the intermediate node and 20 local connections having a 500Mb/s bitrate. The said local connection with 500Mb/s bitrate can also be configured for connecting two users having each a 250Mb/s connection. Furthermore, in the upstream direction, the packets corresponding to the different users are buffered and interleaved together in the processing unit 43 to be transmitted toward the OLT 21.

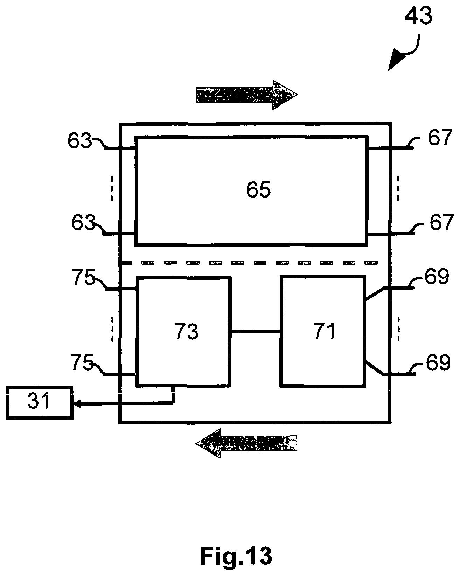

Fig.13 represents a diagram of the processing unit 43. The processing unit can be divided into two parts, a first part which is the upper part of the diagram that corresponds to the processing of the upstream traffic wherein the data packets received at the inputs 63 of the aggregation memory 65 are packets coming from the subscribers ends 24. The aggregation memory 65 is a buffer wherein the packets received from the different users or subscribers are interleaved together to form the higher bitrate signal destined to be sent to the OLT 21. At the output of the aggregation memory 65, the interleaved packets are transmitted to the outputs 67 of the processing unit 43 to be transmitted to the first conversion unit 39 and then to the OLT 21.

A second part which is the lower part of the diagram corresponds to the downstream traffic processing wherein packets are received from the OLT 21 at the inputs 69 of a buffer memory 71 and then transmitted to a packet processing and scheduling unit 73 wherein the destination of the packets is determined. The packet processing and scheduling unit 73 is linked to the control unit 31 to indicate to the control unit 31 the destination of the packets transmitted by the processing unit 43 in order to configure the electronic 45 and optical 47 routing units for routing correctly the packets transmitted to the outputs 75 of the packet processing and scheduling unit 73 toward the different local connections 27.

Concerning the local connections 27, different embodiments can be implemented.

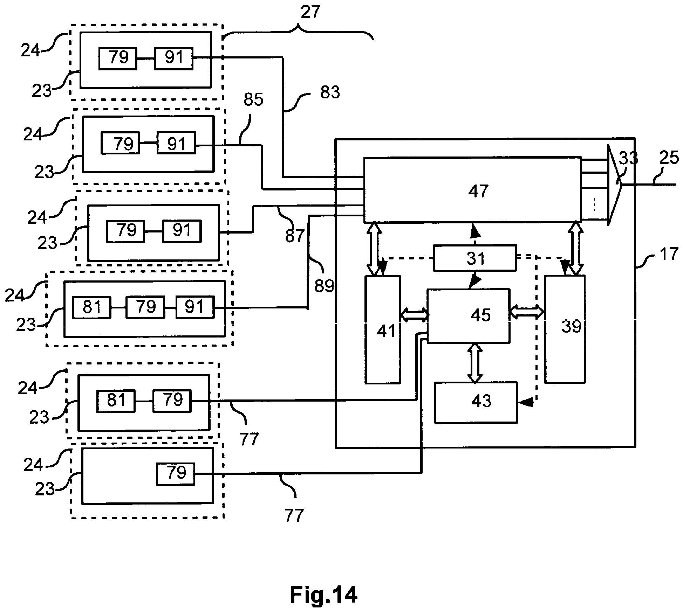

According to a first embodiment described in Fig.14, the local connections 27 are point-to-point connections between the intermediate node or module 17 and the access points 23 at the subscribers ends 24. These point-to-point connections may be electronic connections, in this case, the second conversion unit 41 is bypassed and signals are transmitted directly from the electronic routing unit 45 to the access points 23 through an electric cable such as a twisted pair 77 which linked to an electronic interface such as an Ethernet interface 79. A femtocell 81 can be connected to this Ethernet interface.

These point-to-point connections may also be optical connections achieved by optical fibers. The optical fibers can be single mode fibers 83, multimode fiber 85 or multicore fiber 87. Furthermore, as the distance between the module 17 and the access points 23 is generally limited, plastic optical fiber 89 may also be used in order to reduce the costs. These optical fibers can be bidirectional fibers or two fibers may be coupled, one for the upstream traffic and one for the downstream traffic. With optical fiber connections, the access points 23 comprise a media converter 91 to convert the optical signal to an electronic signal to be delivered to the user interface such as an Ethernet interface 79. A femtocell 81 can also be plugged into the Ethernet interface 79.

Thus, with such point-to-point connections, equipments at the subscribers ends can be simplified as almost no processing capacities is required. A local router may also be coupled to the media converter 91 to distribute the signals toward the different Ethernet interfaces of the subscribers ends.

This flexibility in the types of connections for the local connections enables using existing equipments so that such module 17 may be shared at the same time by a subscriber having only a twisted pair with a basic bitrate and a subscriber having a fiber to the home (FTTH) connection with high bitrate. Moreover, it becomes easy for a subscriber to upgrade its connection as such upgrade requires only a reconfiguration of the module 17 by the operator (in the limit of the capacity of the link of his/her local connection).

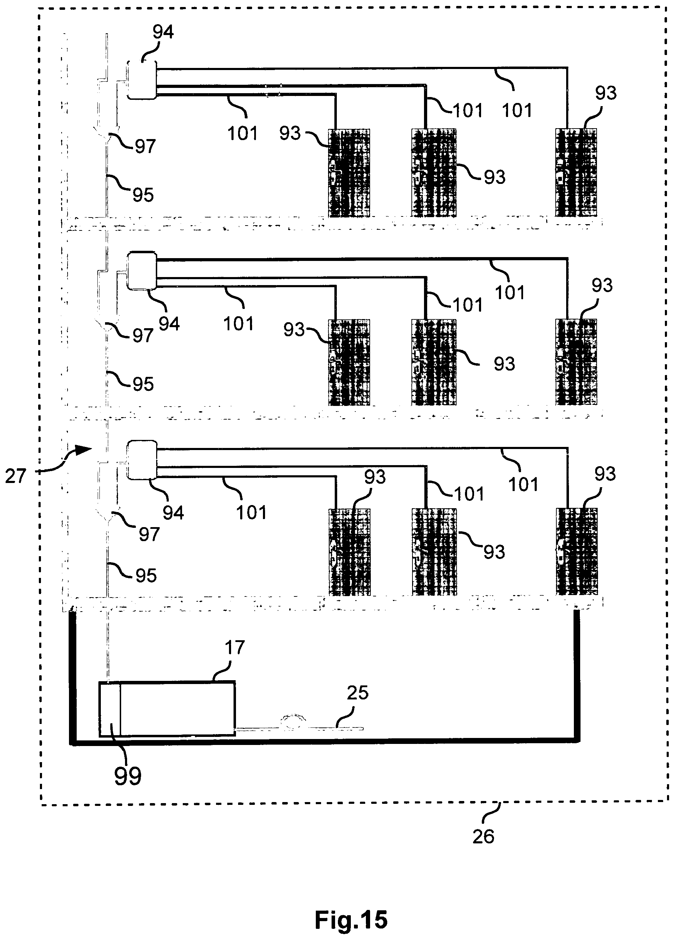

According to a second embodiment, the local connections can be point-to-multipoint connections notably if the access points are close to each other such as in the case of a building comprising many apartments. The module 17 is for example located in the basement or the first floor of the building and a point-to-multipoint connection is used to connect the apartments to the module 17. An example of point-to-multipoint connection is described in Fig.15 wherein the apartments are represented by the doors 93 and comprise the access points 23. The point-to-multipoint local connection 27 is implemented by a plurality of bit interleaved passive optical network (BiPON) repeaters 94 located for example at each floor.

The BiPON repeaters 94 are connected to the module 17 through optical fibers 95 and optical splitters 97. An optical splitter 97 is associated with each BiPON repeater 94 and is configured for routing a part of the signal transmitted by the module 17 to the associated BiPON repeater 94 and the other part toward the other optical splitters 97 located on the upper floors.

According to a first embodiment, the optical splitters 97 are WDM multiplexers so that the different parts of the signal correspond to different wavelengths, each BiPON repeaters 97 receiving a dedicated wavelength.

According to a second embodiment, the optical splitters 97 are optical couplers so that the different parts of the signals refer to a power part of the signal. The optical couplers can be asymmetric splitters in order to balance the signal power received by each BiPON repeater 94. In such architecture, a BiPON intermediate OLT board 99 is required in the module 17 in order to ensure the synchronization between the signals exchanged with the different BiPON repeaters 94.

The BiPON repeaters 94 are configured for separating the received interleaved frames of the signal and for distributing the different frames to the apartments to which they are destined. The connections 101 between the BiPON repeater 94 and the apartments are point-to-point connections and can be optical connections for example through plastic optical fibers or electronic connections for example through twisted pairs. The optical fibers 95 used to connect the module 17 and the BiPON repeaters can be any types of optical fibers but their type can be dictated by the required throughput of the local connection 27.

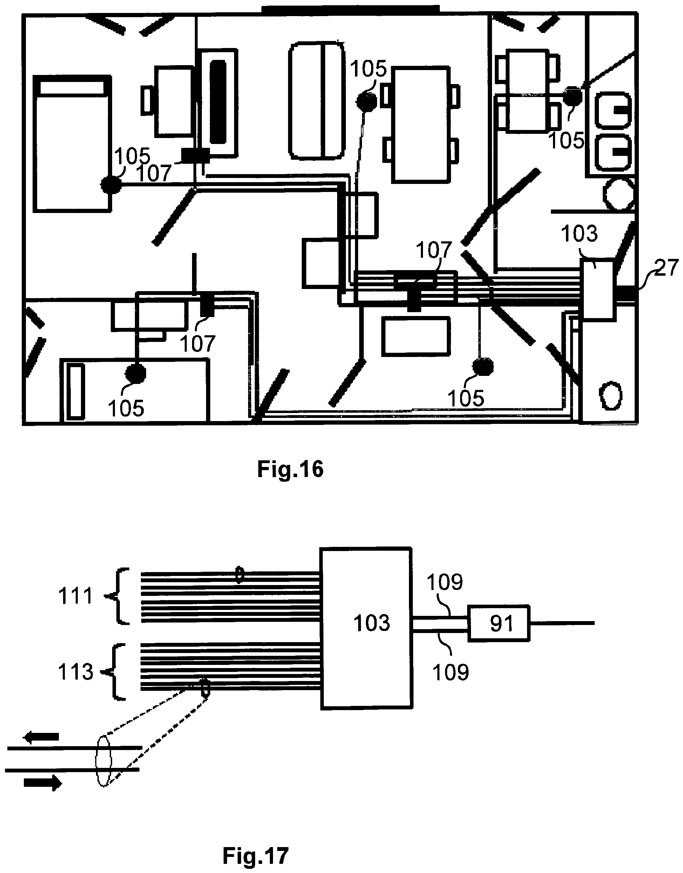

Concerning the access points 23, fig.16 represents an example of apartment comprising a router 103 connected to a local connection 27. The local connection can be a point-to-point connection or a point-to-multipoint connection as described previously. The local connections can be an electronic connection or an optical connection. In the case of an optical connection, the link of the local connection is implemented for example by a single mode fiber or a plastic optical fiber. A media converter 91 which can be a passive or active component can be coupled with or integrated within the router 103 in order to convert a signal received on a single mode fiber to a signal transmitted to a plastic optical fiber or to a twisted pair. The router 103 is configured for distributing the received signals towards the different interfaces such as femto box 105 or Ethernet interfaces 107 of computers. The links between the router 103 and the femto box 105 or Ethernet interfaces 107 are implemented through plastic optical fibers or twisted pairs. Fig.17 shows the details of a connection between a single mode fiber 104 linked to a media converter 91 which is linked to a router 103 through two plastic optical fibers 109. The router 103 is configured to be connected to four Ethernet interfaces 107 through four pairs of plastic optical fibers 111 and to four femto box 105 through four more plastic optical fiber 113. In each pair of plastic optical fibers 111, 113, one fiber is used for the upstream traffic and the other is used for the downstream traffic.

However, the embodiments of the present invention are not limited to the configuration presented in fig.16 and fig.17

It has to be noted that the embodiments of the present invention are not limited to the embodiments previously described and aspects of some embodiments can be combined with aspects of other embodiments such as a combination of point-to-point connections and point-to-multipoint connections within a given module or any other combinations that would be achieved by the man skilled in the art.

The digital processing unit 47 described previously and other processing means used in the module or the access network are provided through the use of a dedicated hardware as well as hardware capable of executing software in association with appropriate software dedicated to the signal processing. When provided by a processor, the digital processing unit 47 may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

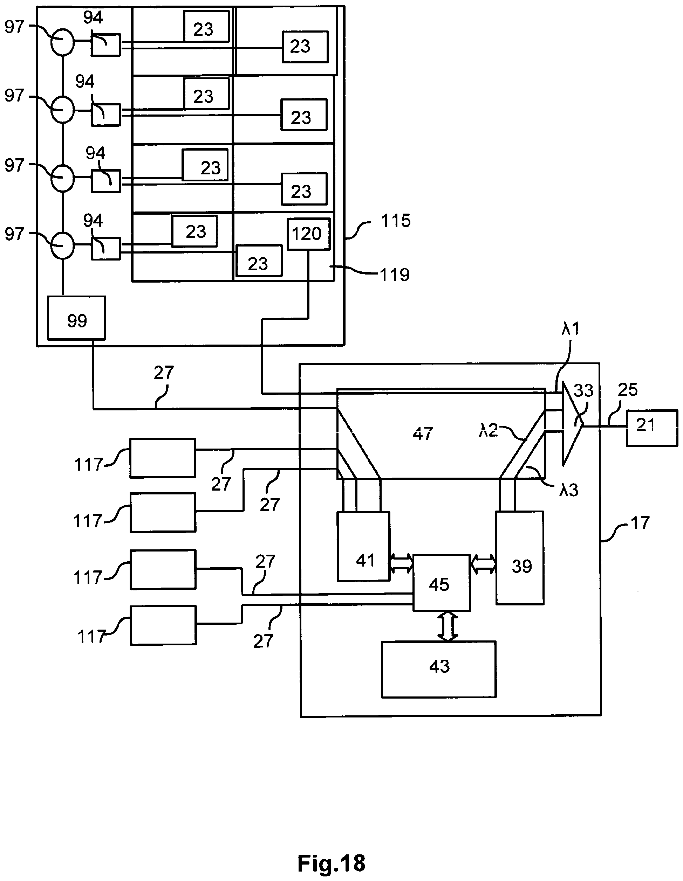

In order to better understand the present invention an example of access network according to the embodiments of the present invention will now be described. A module 17 is located in an habitation area comprising a building 115 with eight apartments and four houses 117. The module 17 is configured for connecting the four houses and the eight apartments as represented in Fig.18. Among the apartments is a ministerial office 119 requiring a secured connection.

The connection between the OLT 21 and the module 17 is a WDM connection comprising three wavelengths (for the downstream traffic) transmitted through an optical fiber 25 which is a bidirectional signal mode fiber. One wavelength noted 1λ is reserved for the secured connection, one wavelength λ3 is used for the other apartments and a wavelength λ2 is used for the houses so that the first conversion unit 39 comprises two transceivers 35 plus one spare transceiver 59. The second conversion unit 41 comprises three transceivers 37 plus one spare transceiver. Indeed, the module 17 comprises an optical routing unit 47 so that the secured connection corresponding to the wavelength λ1 is transmitted transparently and no transceiver is required in the module 17 for this connection. Furthermore, two houses 117 are connected to the module 17 by an electronic connection through a twisted pair. Thus, in the second conversion unit 41, two transceivers 37 are required for the point-to-point connections with the remaining two houses and one transceiver 37 is required for the point-to-multipoint connection with the building 115.

At the OLT 21, all the signals are multiplexed by WDM techniques and transmitted through the single mode optical fiber 25 to the module 17. Signals are then demultiplexed by the WDM multiplexer 33 in three different wavelengths noted λ1, λ2 and λ3. The wavelength λ1 corresponds to the secured connection destined to the ministerial office 119 in building 115 and is therefore transmitted transparently through the optical routing unit 47 toward the local connection corresponding to the ministerial office 119 so that no processing is achieved on the signal. The connection between the OLT 21 and the ministerial office 119 is therefore a point-to-point connection and only a transceiver 120 with limited processing capacities is necessary for processing the received signal.

The other wavelengths λ2 and λ3 are routed by the optical routing unit 47 to the first conversion unit 39 to be received by their respective transceiver 35. The corresponding signals are processed in the processing unit 43 according to their bit interleaved modulation and forwarded to their respective local connections 27. The wavelength λ2 comprises the signals destined to the houses 117 so that the interleaved signals are separated from each other and distributed, either directly by the electronic routing unit 45 to the corresponding twisted pair or to the optical local connection through the second conversion unit 41.

The wavelength λ3 destined to the building 115 is also processed but the signals of the wavelength are kept interleaved to be transmitted toward the building 115. Indeed, the building comprises four floors with two apartments at each floor so that four optical splitters 97 that are optical couplers are distributed between the four floors and are connected to a BiPON OLT board 99 located in the basement of the building 115. The optical splitters 97 are also coupled with a BiPON repeater 94 configured for separating the interleaved signals and distributing the separated signals to their associated apartment or access point 23. The BiPON repeaters 94 comprise for example VECSEL lasers.

It has to be noted that the wavelength of the secured connection λ1 may also be multiplexed with the wavelength destined to the building (corresponding to λ3) in the optical routing unit 47 to be transmitted in a single optical fiber to the building 115. In such case, a WDM multiplexer is required in the optical routing unit 47 for multiplexing both wavelengths.

Thus, with such a module 17, if one of the houses connected with a twisted pair requires a higher bitrate connection, an additional transceiver 37 may easily be added to the second conversion unit 41 so that only the implementation of an optical fiber between the module 17 and this house would be necessary. If the ministerial office 119 is replaced by a private apartment, a classical connection is already implemented so that it requires only a reconfiguration of the module 17 by the operator to deactivate the secured connection and to activate the classical connection.

Thus, the embodiments of the access network of the present invention enable a high flexibility and a low power consumption due to the gathering of the processing capacities in a common module and the control of the activation of the said processing capacities by the operator. Subscribers may therefore easily switch to a higher bitrate connection as minimal hardware changes are required and reconfiguration of the connection is achieved by the operator. Moreover, such architecture allows sharing resources between the different connections processed by the module which leads to a better used of the available resources with respect to existing access networks notably due to the use of WDM and bit interleaved modulation techniques. Furthermore, the number of subscriber connected to a module is not limited so that such architecture may be used in high density area such as cities. The modularity of the module enabling to adapt the capacities of the said module to the requirements of the subscribers.

## Claims

1. Access network module (17) destined to be linked on one side to a remote optical line terminal "OLT" (21) and on the other side to a plurality of access points (23) of a common area (26) via a plurality of local connections (27) **characterized in that** the said module (17) comprises:
- a plurality of optical network units "ONUs" (29) configured for processing signals exchanged between the remote optical line terminal "OLT" (21) and the local connections (27) and,
- a control unit (31) configured for activating and deactivating the optical network units "ONUs" (29) equipments according to the activity of the local connections (27).

2. Access network module (17) in accordance with claim 1 wherein an optical network unit "ONU" (29) comprises:
- a first transceiver (35) for exchanging signals with the OLT (21),
- a second transceiver (37) for exchanging signals with a local connection (27),
- a processing element connected to the first (35) and the second (37) transceivers, and wherein the first transceiver (35) of the plurality of optical network units "ONUs" (29) are combined and integrated in a first conversion unit (39), the second transceiver (37) of the plurality of optical network units "ONUs" (29) are combined and integrated in a second conversion unit (41) and the processing element of the plurality of optical network units "ONUs" (29) are combined and integrated in a shared processing unit (43),
and wherein the processing unit (43), the first conversion unit (39) and the second conversion unit (41) are connected via a reconfigurable electronic routing unit (45).

3. Access network module (17) in accordance with claim 2 wherein the processing unit (43) comprises a modular rack comprising a plurality of seatings and wherein processing elements are implemented as rack-mount processing parts plugged in the seatings.

4. Access network module (17) in accordance with claim 2 or 3 wherein the transceivers (35) of the first conversion unit (39) are shared by the plurality of signals exchanged between the remote optical line terminal "OLT" (21) and the local connections (27).

5. Access network module (17) in accordance with claim 4 wherein the first conversion unit (39) comprises a modular rack comprising a plurality of seatings and wherein the transceivers (35) are implemented as rack mount transceivers plugged in the seatings.

6. Access network module (17) in accordance with claim 4 or 5 wherein the first conversion unit (39) comprises a configuration unit (61) configured for:
- monitoring the signals emitted by the first conversion unit (39),
- detecting a failure of a transceiver (35) of the first conversion unit (39) and,
- reconfiguring the connection with the optical line terminal "OLT" (21).

7. Access network module (17) in accordance with one of the previous claims wherein the access network module (17) is connected to the remote optical line terminal "OLT" (21) through an optical link (25) and wherein the access network module (17) also comprises an optical routing unit (47) connected to:
- the optical link (25) with the optical line terminal "OLT" (25),
- at least one local connection (27),
- at least one transceiver (35) of the first conversion unit (39),
- at least one transceiver (37) of the second conversion unit (41).

8. Access network module (17) in accordance with one of the claims from 2 to 7 wherein the optical link (25) with the optical line terminal "OLT" (21) comprises a wavelength division multiplexing "WDM" feeder configured for transmitting a first plurality of wavelengths in the downstream direction and a second plurality of wavelengths in the upstream direction and wherein,
the access network module (17) comprises at least one wavelength division multiplexing "WDM" multiplexer (33) configured on one side for demultiplexing and for distributing the first plurality of wavelengths respectively to the plurality of transceivers (35) of the first conversion unit (39) and on the other side for multiplexing and for transmitting to the WDM feeder the second plurality of wavelengths received from the plurality of transceivers (35) of the first conversion unit (39).

9. Access network module (17) in accordance with one of the previous claims wherein the said access network module is configured for transmitting signals modulated according to a bit interleaved coding modulation through the local connections (27).

10. Access network module (17) in accordance with one of the previous claims wherein the said access network module is configured for exchanging signals modulated according to a bit interleaved coding modulation with the optical line terminal "OLT" (21).

11. Access network (15) comprising
- an optical line terminal "OLT" (21),
- a plurality of access points (23) located in a residential area (26),
**characterized in that** it also comprises
- an access network module (17) according to one of the previous claims linked on one side to the optical line terminal "OLT" (21) and on the other side to the plurality of access points (23) located in a residential area (26) via local connections (27).

12. Access network (15) in accordance with claim 11, the access network module (17) being defined according to claim 8 wherein the said access network module (17) and the optical line terminal "OLT" (21) are configured for minimizing the number of wavelengths used within the optical link (25) between the said access network module (17) and the said optical line terminal "OLT" (21).

13. Access network (15) according to claim 11 or 12 wherein the local connections (27) are point-to-point connections.

14. Access network (15) in accordance with claim 11 or 12 wherein the local connections (27) are point-to-multipoint connections wherein a point-to-multipoint connection comprises a plurality of bit interleaved passive optical network "BiPON" repeaters (94) configured for distributing received interleaved signals towards a plurality of access points (23) and a plurality of wavelength division multiplexing "WDM" multiplexers configured for distributing the multiplexed signal sent from the module to the plurality of bit interleaved passive optical network "BiPON" repeaters (94).

15. Access network (15) in accordance with one of the claim 11 or 12 wherein the local connections (27) are point-to-multipoint connections wherein a point-to-multipoint connection comprises a plurality of bit interleaved passive optical network "BiPON" repeaters (94) configured for distributing received interleaved signals towards a plurality of access points and a plurality of optical couplers configured for distributing the multiplexed signal sent from the module to the plurality of bit interleaved passive optical network "BiPON" repeaters (94) and wherein the module comprises a bit interleaved passive optical network "BiPON" optical line terminal "OLT" board (99) configured for ensuring synchronisation of the signals between the different bit interleaved passive optical network "BiPON" repeaters (94).

## Patentansprüche

1. Zugangsnetzwerkmodul (17), bestimmt für die Verbindung auf einer Seite mit einem optischen Fernleitungsabschluss "OLT" (21) und auf der anderen Seite mit einer Vielzahl von Zugangspunkten (23) eines gemeinsamen Bereichs (26) über eine Vielzahl von lokalen Verbindungen (27), **dadurch gekennzeichnet, dass** das besagte Modul (17) umfasst:
- eine Vielzahl von optischen Netzwerkeinheiten "ONUs" (29), die konfiguriert sind zum Verarbeiten von Signalen, die zwischen dem optischen Fernleitungsabschluss "OLT" (21) und den lokalen Verbindungen (27) ausgetauscht werden, und
- eine Steuereinheit (31), die konfiguriert ist zum Aktivieren und Deaktivieren der Ausrüstungen der optischen Netzwerkeinheiten "ONUs" (29) gemäß der Aktivität der lokalen Verbindungen (27).

2. Zugangsnetzwerkmodul (17) nach Anspruch 1, wobei eine optische Netzwerkeinheit "ONU" (29) umfasst:
- einen ersten Transceiver (35) zum Austauschen von Signalen mit dem OLT (21),
- einen zweiten Transceiver (37) zum Austauschen von Signalen mit einer lokalen Verbindung (27),
- ein Verarbeitungselement, das mit den ersten (35) und den zweiten (37) Transceivern verbunden ist,
und wobei der erste Transceiver (35) der Vielzahl optischer Netzwerkeinheiten "ONUs" (29) kombiniert und in einer ersten Umwandlungseinheit (39) integriert ist, der zweite Transceiver (37) der Vielzahl von optischen Netzwerkeinheiten "ONUs" (29) kombiniert und integriert ist in einer zweiten Umwandlungseinheit (41) und das Verarbeitungselement der Vielzahl optischer Netzwerkeinheiten "ONUs" (29) kombiniert und integriert ist in einer geteilten Verarbeitungseinheit (43),
und wobei die Verarbeitungseinheit (43), die erste Umwandlungseinheit (39) und die zweite Umwandlungseinheit (41) über eine rekonfigurierbare elektronische Routing-Einheit (45) verbunden sind.

3. Zugangsnetzwerkmodul (17) nach Anspruch 2, wobei die Verarbeitungseinheit (43) ein modulares Rack umfasst, das eine Vielzahl von Sitzflächen umfasst und wobei die Verarbeitungselemente als in die Sitzflächen gesteckte Verarbeitungsteile im Rack eingebaut implementiert sind.

4. Zugangsnetzwerkmodul (17) nach Anspruch 2 oder 3, wobei die Transceiver (35) der ersten Umwandlungseinheit (39) von der Vielzahl von Signalen geteilt wird, die zwischen dem optischen Fernleitungsabschluss "OLT" (21) und den lokalen Verbindungen (27) ausgetauscht werden.

5. Zugangsnetzwerkmodul (17) nach Anspruch 4, wobei die erste Umwandlungseinheit (39) ein modulares Rack umfasst, das eine Vielzahl von Sitzflächen umfasst und wobei die Transceiver (35) als in die Sitzflächen gesteckte Transceiver im Rack eingebaut implementiert sind.

6. Zugangsnetzwerkmodul (17) nach Anspruch 4 oder 5, wobei die erste Umwandlungseinheit (39) eine Konfigurationseinheit (61) umfasst, die konfiguriert ist für:
- Überwachen der Signale, die von der ersten Umwandlungseinheit (39) emittiert werden,
- Erkennen eines Fehlers eines Transceivers (35) der ersten Umwandlungseinheit (39), und
- Rekonfigurieren der Verbindung mit dem optischen Leitungsabschluss "OLT" (21).

7. Zugangsnetzwerkmodul (17) nach einem der vorhergehenden Ansprüche, wobei das Zugangsnetzwerkmodul (17) mit dem optischen Fernleitungsabschluss "OLT" (21) durch eine optische Verbindung (25) verbunden ist und wobei das Zugangsnetzwerkmodul (17) auch eine optische Routing-Einheit (47) umfasst, die verbunden ist mit:
- der optischen Verbindung (25) mit dem optischen Leitungsabschluss "OLT" (25),
- mindestens einer lokalen Verbindung (27),
- mindestens einem Transceiver (35) der ersten Umwandlungseinheit (39),
- mindestens einem Transceiver (37) der zweiten Umwandlungseinheit (41).

8. Zugangsnetzwerkmodul (17) nach einem der Ansprüche 2 bis 7, wobei die optische Verbindung (25) mit dem optischen Leitungsabschluss "OLT" (21) einen Feeder mit Wellenlängenmultiplex "WDM" umfasst, der konfiguriert ist zum Übertragen einer ersten Vielzahl von Wellenlängen in Downstream-Richtung und einer zweiten Vielzahl von Wellenlängen in Upstream-Richtung und wobei
das Zugangsnetzwerkmodul (17) mindestens einen Multiplexer (33) mit Wellenlängenmultiplex "WDM" umfasst, der konfiguriert ist auf einer Seite zum Demultiplexing und zum Verteilen der ersten Vielzahl von Wellenlängen in Bezug auf die Vielzahl von Transceivern (35) der ersten Umwandlungseinheit (39) und auf der anderen Seite zum Multiplexing und zum Übertragen auf den WDM Feeder der zweiten Vielzahl von Wellenlängen, die von der Vielzahl von Transceivern (35) der ersten Umwandlungseinheit (39) empfangen wird.

9. Zugangsnetzwerkmodul (17) nach einem der vorhergehenden Ansprüche, wobei das besagte Zugangsnetzwerkmodul konfiguriert ist zum Übertragen von Signalen, die gemäß einer bitverschachtelten codierten Modulation über die lokalen Verbindungen (27) moduliert sind.

10. Zugangsnetzwerkmodul (17) nach einem der vorhergehenden Ansprüche, wobei das besagte Zugangsnetzwerkmodul konfiguriert ist zum Austauschen von Signalen, die gemäß einer bitverschachtelten codierten Modulation mit dem optischen Leitungsabschluss "OLT" (21) moduliert sind.

11. Zugangsnetzwerk (15), umfassend
- einen optischen Leitungsabschluss "OLT" (21),
- eine Vielzahl von Zugangspunkten (23), die sich in einem stationären Bereich (26) befinden, **dadurch gekennzeichnet, dass** er auch umfasst
- ein Zugangsnetzwerkmodul (17) nach einem der vorhergehenden Ansprüche, verbunden auf einer Seite mit dem optischen Leitungsabschluss "OLT" (21) und auf der anderen Seite mit der Vielzahl von Zugangspunkten (23), die sich in einem stationären Bereich (26) befinden, über lokale Verbindungen (27).

12. Zugangsnetzwerk (15) nach Anspruch 11, wobei das Zugangsnetzwerkmodul (17) definiert ist nach Anspruch 8, wobei das besagte Zugangsnetzwerkmodul (17) und der optische Leitungsabschluss "OLT" (21) konfiguriert sind zum Minimieren der Anzahl von Wellenlängen, die innerhalb der optischen Verbindung (25) benutzt werden, zwischen dem besagten Zugangsnetzwerkmodul (17) und dem besagten optischen Leitungsabschluss "OLT" (21).

13. Zugangsnetzwerk (15) nach Anspruch 11 oder 12, wobei die lokalen Verbindungen (27) Punkt-zu-Punkt-Verbindungen sind.

14. Zugangsnetzwerk (15) nach Anspruch 11 oder 12, wobei die lokalen Verbindungen (27) Punkt-zu-Mehrpunkt-Verbindungen sind, wobei eine Punkt-zu-Mehrpunkt-Verbindung eine Vielzahl von bitverschachtelten passiven optischen Netzwerk-Repeatern "BiPON" (94) umfasst, die konfiguriert sind zum Verteilen der empfangenen verschränkten Signale zu einer Vielzahl von Zugangspunkten (23) und einer Vielzahl von Multiplexern mit Wellenlängenmultiplex "WDM", die konfiguriert sind zum Verteilen des Multiplexsignals, das von dem Modul zur Vielzahl von bitverschränkten passiven optischen Netzwerk-Repeatern "BiPON" (94) gesendet wurde.

15. Zugangsnetzwerk (15) nach einem der Ansprüche 11 oder 12, wobei die lokalen Verbindungen (27) Punkt-zu-Mehrpunkt-Verbindungen sind, wobei eine Punkt-zu-Mehrpunkt-Verbindung eine Vielzahl von bitverschachtelten passiven optischen Netzwerk-Repeatern "BiPON" (94) umfasst, die konfiguriert sind zum Verteilen der empfangenen verschränkten Signale zu einer Vielzahl von Zugangspunkten und einer Vielzahl von optischen Kopplern, die konfiguriert sind zum Verteilen des Multiplexsignals, das von dem Modul zur Vielzahl von bitverschränkten passiven optischen Netzwerk-Repeatern "BiPON" (94) gesendet wurde und wobei das Modul ein optisches Leitungsabschlussboard "OLT" (99) eines bitverschränkten passiven optischen Netzwerks "BiPON" umfasst, das konfiguriert ist zum Sicherstellen der Synchronisation der Signale zwischen den verschiedenen bitverschränkten passiven optischen Netzwerk-Repeatern "BiPON" (94).

## Revendications

1. Module de réseau d'accès (17) destiné à être relié d'un côté à un terminal de ligne optique « OLT » (21) distant et de l'autre côté à une pluralité de points d'accès (23) d'une zone commune (26) via une pluralité de connexions locales (27), **caractérisé en ce que** ledit module (17) comprend :
- une pluralité d'unités de réseau optique « ONU » (29) configurées pour traiter les signaux échangés entre le terminal de ligne optique « OLT » (21) distant et les connexions locales (27), et
- une unité de commande (31) configurée pour activer et désactiver les équipements des unités de réseau optique « ONU » (29) selon l'activité des connexions locales (27).

2. Module de réseau d'accès (17) selon la revendication 1 dans lequel une unité de réseau optique « ONU » (29) comprend :
- un premier émetteur-récepteur (35) destiné à échanger des signaux avec l'OLT (21),
- un deuxième émetteur-récepteur (37) destiné à échanger des signaux avec une connexion locale (27),
- un élément de traitement connecté au premier (35) et au deuxième (37) émetteurs-récepteurs,
et dans lequel les premiers émetteurs-récepteurs (35) de la pluralité d'unités de réseau optique « ONU » (29) sont combinés et intégrés dans une première unité de conversion (39), les deuxièmes émetteurs-récepteurs (37) de la pluralité d'unités de réseau optique « ONU » (29) sont combinés et intégrés dans une deuxième unité de conversion (41) et les éléments de traitement de la pluralité d'unités de réseau optique « ONU » (29) sont combinés et intégrés dans une unité de traitement partagée (43),
et dans lequel l'unité de traitement (43), la première unité de conversion (39) et la deuxième unité de conversion (41) sont connectées via une unité d'acheminement électronique reconfigurable (45).

3. Module de réseau d'accès (17) selon la revendication 2 dans lequel l'unité de traitement (43) comprend un rack modulaire contenant une pluralité de logements et dans lequel les éléments de traitement sont mis en oeuvre en tant qu'éléments de traitement à montage en rack enfichés dans les logements.

4. Module de réseau d'accès (17) selon la revendication 2 ou 3 dans lequel les émetteurs-récepteurs (35) de la première unité de conversion (39) sont partagés par la pluralité de signaux échangés entre le terminal de ligne optique « OLT » (21) distant et les connexions locales (27).

5. Module de réseau d'accès (17) selon la revendication 4 dans lequel la première unité de conversion (39) comprend un rack modulaire contenant une pluralité de logements et dans lequel les émetteurs-récepteurs (35) sont mis en oeuvre en tant qu'émetteurs-récepteurs à montage en rack enfichés dans les logements.

6. Module de réseau d'accès (17) selon la revendication 4 ou 5 dans lequel la première unité de conversion (39) comprend une unité de configuration (61) configurée pour :
- surveiller les signaux émis par la première unité de conversion (39),
- détecter une panne d'un émetteur-récepteur (35) de la première unité de conversion (39), et
- reconfigurer la connexion avec le terminal de ligne optique « OLT » (21).

7. Module de réseau d'accès (17) selon l'une des revendications précédentes, dans lequel le module de réseau d'accès (17) est connecté au terminal de ligne optique « OLT » (21) distant via une liaison optique (25) et dans lequel le module de réseau d'accès (17) comprend également une unité d'acheminement optique (47) connectée à :
- la liaison optique (25) avec le terminal de ligne optique « OLT » (25),
- au moins une connexion locale (27),
- au moins un émetteur-récepteur (35) de la première unité de conversion (39),
- au moins un émetteur-récepteur (37) de la deuxième unité de conversion (41).

8. Module de réseau d'accès (17) selon l'une des revendications 2 à 7 dans lequel la liaison optique (25) avec le terminal de ligne optique « OLT » (21) comprend une ligne de transmission à multiplexage en longueur d'onde « WDM » configurée pour transmettre une première pluralité de longueurs d'onde dans la direction de la liaison descendante et une deuxième pluralité de longueurs d'onde dans la direction de la liaison montante et dans lequel,
le module de réseau d'accès (17) comprend au moins un multiplexeur à multiplexage en longueur d'onde « WDM » (33) configuré d'un côté pour démultiplexer et pour distribuer la première pluralité de longueurs d'onde respectivement vers la pluralité d'émetteurs-récepteurs (35) de la première unité de conversion (39) et de l'autre côté pour multiplexer et pour transmettre à la ligne de transmission WDM la deuxième pluralité de longueurs d'onde reçues en provenance de la pluralité d'émetteurs-récepteurs (35) de la première unité de conversion (39).

9. Module de réseau d'accès (17) selon l'une des revendications précédentes dans lequel ledit module de réseau d'accès est configuré pour transmettre des signaux modulés selon une modulation à codage par entrelacement de bits via les connexions locales (27).

10. Module de réseau d'accès (17) selon l'une des revendications précédentes dans lequel ledit module de réseau d'accès est configuré pour échanger des signaux modulés selon une modulation à codage par entrelacement de bits avec le terminal de ligne optique « OLT » (21).

11. Réseau d'accès (15) comprenant
- un terminal de ligne optique « OLT » (21),
- une pluralité de points d'accès (23) situés dans une zone résidentielle (26), **caractérisé en ce qu'**il comprend également
- un module de réseau d'accès (17) selon l'une des revendications précédentes relié d'un côté au terminal de ligne optique « OLT » (21) et de l'autre côté à la pluralité de points d'accès (23) situés dans une zone résidentielle (26) via des connexions locales (27).

12. Réseau d'accès (15) selon la revendication 11, le module de réseau d'accès (17) étant défini selon la revendication 8 dans lequel ledit module de réseau d'accès (17) et le terminal de ligne optique « OLT » (21) sont configurés pour minimiser le nombre de longueurs d'onde utilisées sur la liaison optique (25) entre ledit module de réseau d'accès (17) et ledit terminal de ligne optique « OLT » (21).

13. Réseau d'accès (15) selon la revendication 11 ou 12 dans lequel les connexions locales (27) sont des connexions point à point.

14. Réseau d'accès (15) selon la revendication 11 ou 12 dans lequel les connexions locales (27) sont des connexions point à multipoint dans lequel une connexion point à multipoint comprend une pluralité de répéteurs de réseau optique passif à entrelacement de bits « BiPON » (94) configurés pour distribuer les signaux entrelacés reçus vers une pluralité de points d'accès (23) et une pluralité de multiplexeurs à multiplexage en longueur d'onde « WDM » configurés pour distribuer le signal multiplexé envoyé depuis le module vers la pluralité de répéteurs de réseau optique passif à entrelacement de bits « BiPON » (94).

15. Réseau d'accès (15) selon l'une des revendications 11 ou 12 dans lequel les connexions locales (27) sont des connexions point à multipoint dans lequel une connexion point à multipoint comprend une pluralité de répéteurs de réseau optique passif à entrelacement de bits « BiPON » (94) configurés pour distribuer les signaux entrelacés reçus vers une pluralité de points d'accès et une pluralité de coupleurs optiques configurés pour distribuer le signal multiplexé envoyé depuis le module vers la pluralité de répéteurs de réseau optique passif à entrelacement de bits « BiPON » (94) et dans lequel le module comprend une carte (99) de terminal de ligne optique « OLT » de réseau optique passif à entrelacement de bits « BiPON » configurée pour assurer la synchronisation des signaux entre les différents répéteurs de réseau optique passif à entrelacement de bits « BiPON » (94).
